# EUROPEAN PATENT SPECIFICATION

(11) **EP 2 122 921 B1**
(45) Date of publication and mention of the grant of the patent: **21.07.2010**
(21) Application number: 07854935.9
(22) Date of filing: 05.12.2007
(51) Int. Cl.: H04L 12/28, H04L 1/18

(54) **RETRANSMISSION SCHEME FOR MAINTAINING PERFORMANCE FOR WIRELESS COMMUNICATIONS IN THE PRESENCE OF PERIODIC INTERMITTENT INTERFERENCE**
WEITERÜBERTRAGUNGSSCHEMA ZUR AUFRECHTERHALTUNG DER LEISTUNGSFÄHIGKEIT FÜR DRAHTLOSE KOMMUNIKATION BEI ANWESENHEIT PERIODISCHER UNTERBROCHENER STÖRUNGEN
SCHÉMA DE RETRANSMISSION POUR MAINTENIR LE NIVEAU DE PERFORMANCE DE COMMUNICATIONS SANS FIL EN PRÉSENCE D'INTERFÉRENCES INTERMITTENTES PÉRIODIQUES

(30) Priority: 15.12.2006 US 611337
(43) Date of publication of application: 25.11.2009
(73) Proprietor: MOTOROLA, INC., Schaumburg, IL 60196 (US)
(72) Inventor: MAKHLOUF, Isam R., Lake Zurich, IL 60047 (US); EMEOTT, Stephen P., Rolling Meadows, IL 60008 (US)
(74) Representative: McLeish, Nicholas Alistair Maxwell
(86) International application number: PCT/US2007/086443
(87) International publication number: WO 2008/076638

(56) References cited:
- EP-A- 0 963 051
- WO-A-01/65709
- TOURRILHES J ED - INSTITUTE OF ELECTRICAL AND ELECTRONICS ENGINEERS: "Fragment adaptive reduction: coping with various interferers in radio unlicensed bands" ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 1, 11 June 2001 (2001-06-11), pages 239-244, XP010553001 ISBN: 978-0-7803-7097-5

## Description

### BACKGROUND

### Field of the Invention

The present invention relates to WLAN based voice communications and, more particularly, to a retransmission scheme for maintaining performance for communications over a WiFi (e.g., 802.11 family of protocols) network in the presence of periodic intermittent interference.

### Description of the Related Art

WiFi Networks are wireless networks conforming to an Institute of Electrical and Electronics Engineers (IEEE) 802.11 based standard. WiFi transmissions utilize a collision sensing mechanism referred to as the clear channel assessment (CCA) algorithm that senses an energy level on a channel. The CCA algorithm permits a communication channel to be used when an interference level is below the CCA established threshold, which allows for an occurrence of many collisions and/or some level of interference believed to be reasonable. As a result, a moderate amount of packet loss is expected and accounted for at both ends of a WiFi based link.

Packet losses are handled by retransmitting lost packets. Retransmissions are usually initiated at the Media Access Control (MAC) layer and are limited to approximately six retransmissions. Back-off periods between retransmissions are randomly drawn between zero and a contention window length, which varies based upon a retry number. Using a random back-off period statistically ensures that collisions due to transmissions from competing devices and/or competing broadcasts occur asynchronously with one another. That is, two conflicting transmissions do not attempt to repetitively retransmit packets at matching times, which would result in repetitive collisions during retransmission attempts. Taking into account the 802.11 Distributed Coordination Function (DCF), the cumulative back-off time is uniformly distributed between 0.25 millisecond (ms) and 27.5 ms for an initial delivery attempt followed by up to six retransmissions. Appreciably, because the minimum retransmission time is 0.25 ms, it is possible for retransmissions to also occur back to back with each other.

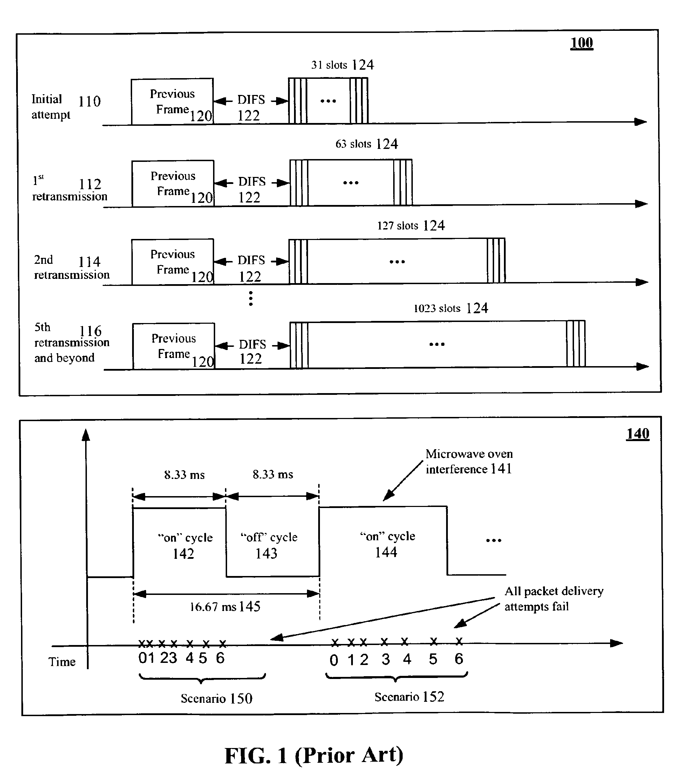

The conventional 802.11 MAC layer retransmission scheme is illustrated by system 100 of FIG. 1. System 100 illustrates an initial transmission attempt 110, a first retransmission attempt 112, a second retransmission attempt 114, and a fifth retransmission attempt 116. A third, fourth, and sixth or more transmission attempts, while not explicitly shown in system 100 each follow the same scheme.

Each transmission 110-116 includes a frame 120, a DCF Inter-Frame Space (DIFS) 122, and a set of time slots 124, where one time slot is randomly selected. The DIFS equals 34 µs and each time slot is a 9 µs slot. Assuming six retransmissions plus an initial transmission attempt 110 and ignoring a length of time for frame 120 transmission, the cumulative back-off time equals 7*DIFS +(0, (31+63+...+1023+1023)X9]ms, which equals [238 µs, 27.5 ms]. Hence, a period over which retransmission attempts occur ranges from less than one ms to 27.5 ms.

The current WiFi retransmission scheme can perform poorly in the presence of periodic intermittent interference (PII). PII emitted by a microwave oven, for example, may disrupt or impair communications between a WiFi access point and a wireless device. Diagram 140 of FIG. 1 illustrates a scenario of a microwave oven providing PII for WiFi transmissions. Household microwave ovens use magnetron tubes that generally operate with an approximately fifty percent duty cycle over 16.67 ms or 1/60 Hz periods in North America. The timing waveform of the emitted energy can generally be characterized as a square wave, cycling on (142, 144) for approximately 8.33 ms, then off (143) for approximately 8.33 ms. A full period 145 for the interference is approximately 16.67 ms. The generated cycle is generally on-channel or within a channel range of an 802.11 network operating in the 2.4 GHz band. WiFi transmission scenario 150 and scenario 152 illustrate WiFi transmission attempts with six subsequent retries. In scenario 150, attempts 0-6 each occurring during an on-cycle 142 of the microwave oven, which causes each transmission attempt to fail due to microwave interference. In scenario 150, a sixth delivery reattempt occurs during off-cycle 143, where other retransmission attempts (attempts 0-5) occur during on-cycle 144. The sixth transmission can fail due to low signal to noise ratio (SNR), collisions, and/or non-microwave caused interference.

No known existing solution satisfactorily handles WiFi transmissions in the presence of PII from common sources, such as microwave ovens. One attempted solution increases a WLAN data rate in the presence of intermittent interference in order to reduce the packet length to reduce a probability of collision with interference. This solution decreases WLAN range since higher data rates generally have less range. Further, this solution does not seek to avoid interference, just to reduce a rate of loss in an environment where interference exists. When interference results in a relatively high loss rate, this attempted solution fails.

The paper "Fragment adaptive reduction: coping with various interferers in radio unlicensed bonds", by J. Tourrilhes, ICC 2001, XP010553001, discloses a method to delay retransmissions to avoid interference.

Another attempted solution is to avoid transmitting on frequencies/channels where intermittent interference is detected. Many microwave ovens emit interference across an entire industrial, scientific and medical (ISM) band, which means than no "clear" frequencies/channels are available. Still another solution is to schedule transmissions around PII. Many microwave ovens, however, have poorly-defined emission characteristics versus time, which results in cycle timing not always being consistent or reliably detectable. Since scheduled avoidance solutions depend upon well-defined emission characteristics versus time, these solutions are subject to failure depending upon microwave characteristics. Further, continuous emission detection actions can consume significant power resource. Aggressive power consumption can be highly problematic for mobile wireless devices, such as mobile telephones, which are the devices which most likely suffer detrimental effects due to PII.

### SUMMARY OF THE INVENTION

The present invention controls spacing between retransmissions of data packets in a WiFi network when in the presence of periodic intermittent interference (PII) to ensure that a significant percentage of the retransmitted data packets are transmitted when interference is not present. Unlike traditional WiFi retransmission schemes, the invention introduces a minimum retransmission time between retransmission attempts. This minimum time can be selected so that a cumulative time for all allowed retransmissions is likely to span a known minimum duration, where the minimum duration is associated with characteristics of a known PII source.

For example, minimum back-off times can be designed so that retransmissions span a period greater than a microwave oven "on" cycle (greater than 8.33 ms) but still less than a full microwave oven interference period (less than 16.67 ms). Since this cumulative time period falls within range of cumulative retransmission times for 802.11 based retransmissions schemes, the invention can be implemented within a scope of the existing 802.11 specifications without a significant hardware/software changes that would require significant retooling.

The present invention can be implemented in accordance with numerous aspects consistent with the material presented herein. For example, one aspect of the present invention can include a retransmission method for wireless networks with enhanced PII performance. The method can identify an on-cycle duration and an off-cycle duration for a type of PII. A minimum back-off time can be calculated for a wireless local area network (WLAN) interference retransmission algorithm having an original transmission and a plurality of retransmissions. The minimum back-off time can be added to a retransmission time of at least a portion of the retransmissions. The calculated back-off time can be a value that ensures that a cumulative back-off time for the interference retransmission algorithm has a minimum duration greater than the on-cycle duration and a minimum duration less than the sum of the on-cycle duration and the off-cycle duration. Data can be wirelessly conveyed in accordance with the interference retransmission algorithm.

Another aspect of the invention can include a method of conveying data over a wireless network that ensures performance in a presence of PII. The method can include a step of establishing a default retransmission algorithm and an interference retransmission algorithm. The default retransmission algorithm can be a Distributed Coordination Function (DCF) based algorithm implemented in a Media Access Control (MAC) layer in conformance with an Institute of Electrical and Electronics Engineers (IEEE) 802.11 based standard. The minimum cumulative back-off time for the default transmission algorithm can be less a minimum cumulative back-off time for the interference retransmission algorithm. A determination can be made whether periodic intermittent interference is present. If so, the default retransmission algorithm can be automatically utilized for wireless data conveyances. When PII is present, the interference retransmission algorithm can be automatically utilized.

Still another aspect of the invention can include a communication device including a wireless transceiver, a retransmission engine, more than one retransmission algorithms, and an interference detector. The wireless transceiver can convey data over an IEEE 802.11 based WLAN. The retransmission engine can automatically retransmit data packets a plurality of times whenever a packet transmission attempt fails. The retransmission algorithms can be used to determine a time at which the retransmission engine attempts each automatic retransmission. The algorithms can include a default retransmission algorithm and an interference retransmission algorithm. The interference detector can automatically detect PII.

In the system, the default retransmission algorithm can be automatically used when no interference is detected by the interference detector. The interference retransmission algorithm can be automatically used when interference is detected by the interference detector. A minimum cumulative transmission time for packet transmissions before a retry limit is exceeded is less than one ms for the default retransmission algorithm and is greater than eight ms for the interference retransmission algorithm.

It should be noted that various aspects of the invention can be implemented as a program for controlling computing equipment to implement the functions described herein, or a program for enabling computing equipment to perform processes corresponding to the steps disclosed herein. This program may be provided by storing the program in a magnetic disk, an optical disk, a semiconductor memory, or any other recording medium. The program can also be provided as a digitally encoded signal conveyed via a carrier wave. The described program can be a single program or can be implemented as multiple subprograms, each of which interact within a single computing device or interact in a distributed fashion across a network space.

The method detailed herein can also be a method performed at least in part by a service agent and/or a machine manipulated by a service agent in response to a service request.

### BRIEF DESCRIPTION OF THE DRAWINGS

There are shown in the drawings, embodiments which are presently preferred, it being understood, however, that the invention is not limited to the precise arrangements and instrumentalities shown.

FIG. 1 (prior art) illustrates a scenario of a microwave oven providing periodic intermittent interference (PII) for WiFi transmissions.

FIG. 2 is a schematic diagram illustrating a system including a wireless network whose performance is maintained in a presence of PII in accordance with an embodiment of the inventive arrangements disclosed herein.

FIG. 3 illustrates a scenario of a microwave oven providing PII for WiFi transmissions over a WLAN enhanced to maintain performance in a presence of PII.

FIG. 4 is a flow chart of a method for ensuring wireless network performance is maintained in a presence of PII in accordance with an embodiment of the inventive arrangements disclosed herein.

### DETAILED DESCRIPTION OF THE INVENTION

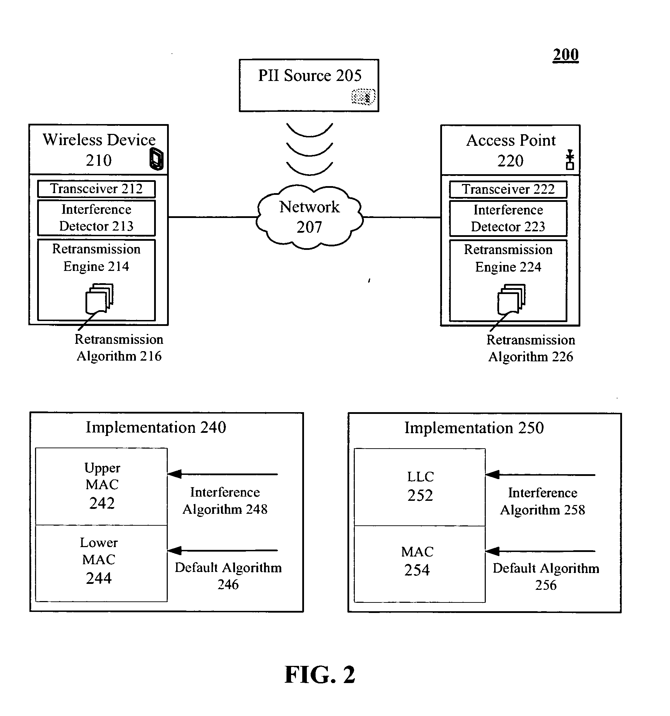

FIG. 2 is a schematic diagram illustrating a system 200 including a wireless network 207 whose performance is maintained in a presence of periodic intermittent interference (PII) in accordance with an embodiment of the inventive arrangements disclosed herein. The system 200 can include a wireless device 210 that is communicatively linked to an access point 220 via wireless network 207. A PII source 205 can generate PII that affects wireless network 207, which results in a loss of data packets that are conveyed between device 210 and access point 220.

Wireless device 210 can be any wireless device including a transceiver 212 configured to wirelessly convey data over network 207. Device 210 can include, for example, a mobile telephone, a Voice over WLAN (VoWLAN) handset, a notebook computer, a desktop computer, a tablet computer, a wearable computer, an embedded computer, a mobile email appliance, a media player, an entertainment system, and the like.

Access point 220 can be any access point for wireless network 207, which includes a transceiver 222 configured to wireless send/receive digitally encoded data to/from device 210.

Network 207 can be wireless local area network (WLAN) conforming to an Institute of Electrical and Electronics Engineers (IEEE) 802.11 based standard. In one embodiment, network 207 can be specifically configured to handle real-time communications, such as voice communications, media streaming, and the like.

PII source 205 can be any device that generates PII that potentially interferes with data transmissions occurring over network 207. One common PII source 205 is a microwave oven.

The retransmission engine 214, 224 can include a retransmission algorithm 216, 226 that is specifically configured to ensure that a signification percentage of retransmitted packets or frames are transmitted when interference from PII source 205 is not present. The retransmission engine 214, 224 can include multiple different algorithms 216, 226, tailored for different PII sources 205 having different on/off-cycle characteristics. The retransmission engine 214, 224 can also include a default retransmission algorithm 216, 226 that is used when no PII source 205 is detected.

The algorithms 216, 226 can leverage known timing properties of common PII sources 205 (e.g., microwave ovens). More specifically, the algorithms 216, 226 establish a minimum retransmission time for each retransmission attempt. This minimum retransmission time can be established for algorithm 216, 226 that sets timing parameters so that a cumulative time for all allowed retransmissions is statistically likely to span some minimum duration that takes into account PII characteristics. The minimum retransmission time can also be selected so that the retransmissions are typically less than a full period of a PII generated by source 205.

The interference detector 213, 223 can detect a presence or an absence of PII interference. In one embodiment, detector 213, 223 can also detect a duration for an on-cycle and a duration for an off-cycle of any detected PII. When interference is absent, a default retransmission algorithm 216, 226 can be utilized. When interference is present, an interference retransmission algorithm can be utilized. The interference algorithm can have a longer minimum cumulative transmission span than the default algorithm. Further, the minimum cumulative transmission span for the interference algorithm can be greater than the on-cycle duration and less than the sum of the on-cycle and off-cycle durations of detected PII.

The retransmission engine 214 can control retransmissions in multiple different manners. In one implementation 240, the engine 214 can manage packet-delivery control, back-off, and retransmissions from a flexible Media Access Control (MAC) layer. Implementation 240 can implement the default algorithm 246 in a lower MAC region 244 and an interference algorithm 248 in an upper MAC region 242.

In a different implementation 250, higher levels of the Open Systems Interconnection (OSI) reference model can be used to implement the interference algorithm 258. For example, the default algorithm 256 can be implemented by the MAC layer 254, while a Logical Link Control (LLC) 252 layer can implement the interference algorithm 258.

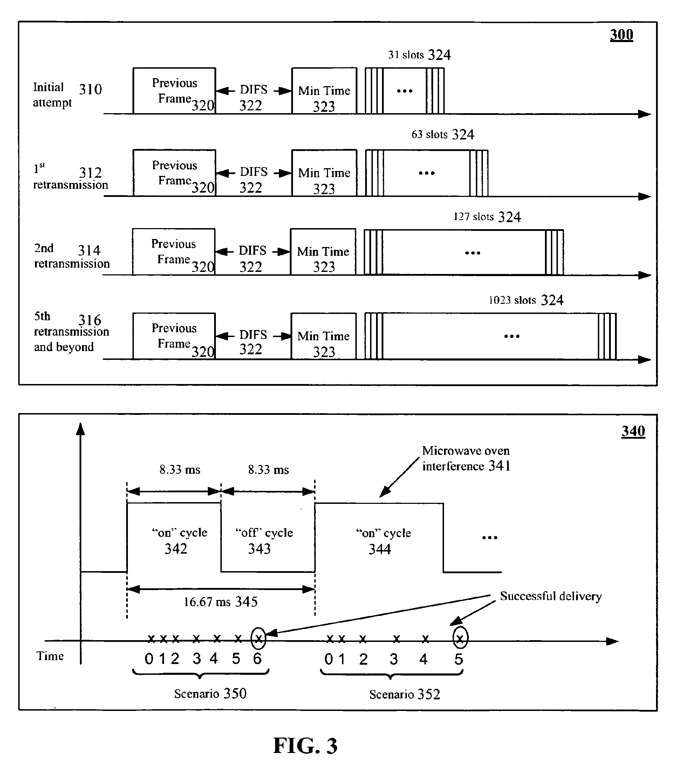

Diagram 340 shown in FIG. 3 illustrates a use case for algorithm 216, 226 that is specifically designed to perform in the presence of microwave oven (205) caused PII. Microwave oven interference 341 has an on-cycle 342, 344 of approximately 8.33 ms followed by an off-cycle 343 of approximately 8.33 ms. The full microwave oven interference period 345 is approximately 16.67 ms. Minimum back-off periods 323 or minimum retransmission times are established to ensure that a retransmission set (shown by scenario 350 and scenario 352) spans a period greater than the on-cycle 342, 344 (8.33 ms) but less than the interference period 345 (16.67 ms). This results in a statistically significant percentage of retransmission frames (frames associated with retransmission 5 and retransmission 6 in scenario 350 and frames associated with retransmission 5 in scenario 352) being transmitted during an off-cycle of the microwave interference 341. Stated in a different fashion, establishing a minimum retransmission time ensures that a time span for scenario 350 and 352 is statistically greater than a span for scenarios 150 and 152, which results in more transmissions occurring outside a time window (8.33 ms) where PII is present.

A set of transmission attempts generated by algorithm 216, 226 is illustrated by system 300 of FIG. 3. System 300 illustrates an initial transmission attempt 310, a first retransmission attempt 312, a second retransmission attempt 314, and a fifth retransmission attempt 316. A third, fourth, and sixth or more transmission attempts, while not explicitly shown in system 300 each follow the same scheme.

Each transmission 310-316 includes a frame 320, a DCF Inter-Frame Space (DIFS) 322, a minimum retransmission time 323, and a set of time slots 324, one of which is randomly selected. The DIFS can equal 34 µs and each time slot can be a 9 µs slot. Assuming six retransmissions plus an initial transmission attempt 310 and ignoring a length of time for frame 320 transmission, the cumulative back-off time equals 7*DIFS +(0, (31+63+...+1023+1023)X9]ms + 6*the minimum retransmission time 323, which equals [238µs + 6* time 323, 27.5ms + 6* time 323]. Now a minimum retransmission time 323 can be defined so that the minimum span is greater than 8.33 ms (on-cycle 342). Assuming the algorithm 216, 226 is set for a minimum span of 9.034 ms, the minimum retransmission time 323 can be (9.034 ms - 34 ms) / 6 = 1.5 ms.

It should be noted that although system 300 shows the minimum transmission time 323 as a static, uniform value, algorithms 216, 226 are not so limited. Instead, algorithms 216, 226 can utilize any mathematical function as a "minimum transmission time 323" that ensures a cumulative back-off time is greater than the on-cycle of the PII (8.33 ms).

For example, the algorithm 216, 226 can cause a random selector that selects slots 224 to limit its selection to an upper 75% of available slots. Therefore, a random selection of slots 324 for the initial attempt 310 can select from slots 7-31, which prevents slots 0-6 from being selected. A random selection for the first retransmission 312 can select from slots 15-63; transmission 314 from slots 31-127; and transmission 316 from slots 255-1023. In another example, the algorithm 216, 226 can consider a frame duration 320, when establishing the minimum transmission time 323.

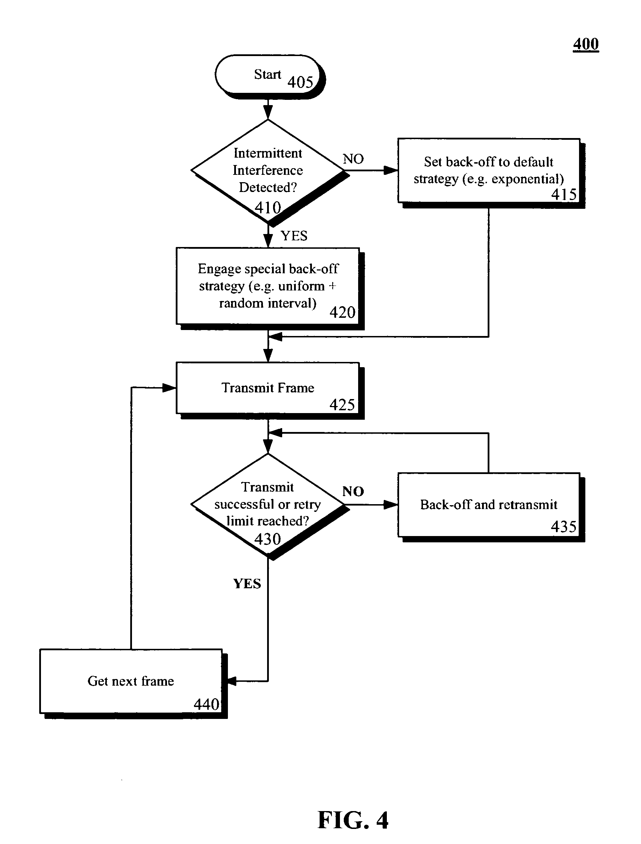

FIG. 4 is a flow chart of a method 400 for ensuring wireless network performance is maintained in a presence of PII in accordance with an embodiment of the inventive arrangements disclosed herein. The method 400 can be performed in the context of system 200 or similar system.

Method 400 can start 405 by attempting to detect 410 intermittent interference. When no interference is detected, the method can proceed from step 410 to step 415, where a retransmission algorithm can be set to a default strategy (e.g., an exponential back-off strategy, such as an 802.11 DCF strategy). If interference is detected in step 410, the method can proceed to step 420, where a special retransmission strategy can be engaged (e.g., uniform minimum transmission time + a random interval). In one configuration, when the interference is detected, an approximate length of an intermittent interference on/off-cycle can be determined. The special retransmission strategy can be based upon the determined on/off-cycle. For example, the minimum transmission time can be calculated to ensure that the cumulative back-off time is greater than the on-cycle.

In step 425, a frame can be transmitted. In step 430, a determination can be made regarding whether the transmission was successful and/or whether the retry limit has been reached. If neither condition occurs, the method can proceed to step 435, where the method can wait a calculated back-off time determined by the active retransmission strategy. When this time expires, the frame can be retransmitted, and the method can loop back to step 430, which determines if the retransmission was successful.

When the conditions of step 430 occur, the method can proceed from step 430 to step 440, where a next frame to be transmitted can be determined. This next frame can be transmitted in step 425.

The present invention may be realized in hardware, software, or a combination of hardware and software. The present invention may be realized in a centralized fashion in one computer system or in a distributed fashion where different elements are spread across several interconnected computer systems. Any kind of computer system or other apparatus adapted for carrying out the methods described herein is suited. A typical combination of hardware and software may be a general purpose computer system with a computer program that, when being loaded and executed, controls the computer system such that it carries out the methods described herein.

The present invention also may be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

This invention may be embodied in other forms without departing from the essential attributes thereof. Accordingly, reference should be made to the following claims, rather than to the foregoing specification, as indicating the scope of the invention.

## Claims

1. A retransmission method for wireless networks with enhanced periodic intermittent interference performance comprising:
identifying an on-cycle duration and an off-cycle duration for a type of periodic intermittent interference;
calculating a minimum back-off time for a wireless local area network (WLAN) interference retransmission algorithm having an original transmission and a plurality of retransmissions, said minimum back-off time being added to a retransmission time of at least a portion of the retransmissions, wherein the calculated back-off time is a value that ensures that a cumulative back-off time for the interference retransmission algorithm has a minimum duration greater than the on-cycle duration and a minimum duration less than the sum of the on-cycle duration and the off-cycle duration; and
wirelessly conveying data in accordance with the interference retransmission algorithm,
whereby such cumulative back-off time is defined as the period over which retransmission attempts occur.

2. The retransmission method of claim 1, further comprising:
identifying a default retransmission algorithm that does not include a delay related to the calculated minimum back-off time;
detecting whether the periodic intermittent interference is present;
utilizing the default retransmission algorithm for wireless data conveyances when no periodic intermittent interference is detected; and
utilizing the interference retransmission algorithm for wireless data conveyances when periodic intermittent interference is detected.

3. The method of claim 2, wherein the default retransmission algorithm is implemented in a lower Media Access Control (MAC) layer, and wherein the interference retransmission algorithm is implemented in an upper Media Access Control (MAC) layer.

4. The method of claim 2, wherein the default retransmission algorithm is implemented in a Media Access Control (MAC) layer, and wherein the interference retransmission algorithm is implemented in a Logical Link Control (LLC) layer.

5. The method of claim 1, wherein the on-cycle duration is between 8.00 ms and 8.66 ms.

6. The method of claim 1, wherein the wireless local area network (WLAN) operates in a 2.4GHz band, and wherein the periodic intermittent interference (PII) is generated by a microwave oven.

7. The method of claim 1, wherein the minimum back-off time is a uniform time applied to each of the retransmissions.

## Patentansprüche

1. Übertragungswiederholungs-Verfahren für drahtlose Netze mit einer verbesserten periodischen intermittierenden Interferenzeffizienz, wobei das Verfahren die folgenden Schritte aufweist:
Bestimmung einer Einschalt-Periodendauer und einer Ausschalt-Periodendauer für eine Art von periodischer intermittierender Interferenz;
Berechnung einer Mindest-Rücksetzzeit für einen Interferenz-Übertragungswiederholungs-Algorithmus eines drahtlosen lokalen Netzes (WLAN), wobei der Algorithmus eine ursprüngliche Übertragung und eine Vielzahl von Übertragungswiederholungen aufweist, wobei die Mindest-Rücksetzzeit zu einer Übertragungswiederholungszeit mindestens eines Teils der Übertragungswiederholungen addiert wird, **dadurch gekennzeichnet, dass** die berechnete Rücksetzzeit ein Wert ist, welcher sicherstellt, dass eine anwachsende bzw. kumulierte Rücksetzzeit für den Interferenz-Übertragungswiederholungs-Algorithmus eine Mindestdauer aufweist, welche länger als die Einschalt-Periodendauer ist, und eine Mindestdauer, welche kürzer als die Summe aus der Einschalt-Periodendauer und der Ausschalt-Periodendauer ist; und
drahtlose Übermittlung von Daten gemäß dem Interferenz-Übertragungswiederholungs-Algorithmus,
wobei eine derartige anwachsende bzw. kumulierte Rücksetzzeit als die Periode bzw. Dauer definiert ist, während welcher Übertragungswiederholungsversuche auftreten.

2. Übertragungswiederholungs-Verfahren nach Anspruch 1, welches des Weiteren die folgenden Schritte aufweist:
Bestimmung eines Standardeinstellungs-Übertragungswiederholungs-Algorithmus, welcher keine in Beziehung mit der berechneten Mindest-Rücksetzzeit stehende Verzögerung einschließt;
Erfassung, ob die periodische intermittierende Interferenz vorhanden ist bzw. vorliegt;
Verwendung des Standardeinstellungs-Übertragungswiederholungs-Algorithmus für drahtlose Datenübermittlungen, wenn keine periodische intermittierende Interferenz erfasst wird; und
Verwendung des Standardeinstellungs-Übertragungswiederholungs-Algorithmus für drahtlose Datenübermittlungen, wenn eine periodische intermittierende Interferenz erfasst wird.

3. Verfahren nach Anspruch 2, **dadurch gekennzeichnet, dass** der Standardeinstellungs-Übertragungswiederholungs-Algorithmus in einer unteren Media Access Control (MAC)- Schicht implementiert bzw. realisiert ist, und dass der Interferenz-Übertragungswiederholungs-Algorithmus in einer oberen Media Access Control (MAC)-Schicht implementiert ist.

4. Verfahren nach Anspruch 2, **dadurch gekennzeichnet, dass** der Standardeinstellungs-Übertragungswiederholungs-Algorithmus in einer Media Access Control (MAC)-Schicht realisiert ist, und dass der Interferenz-Übertragungswiederholungs-Algorithmus in einer Logical Link Control (LLC)-Schicht implementiert ist.

5. Verfahren nach Anspruch 1, **dadurch gekennzeichnet, dass** die Einschalt-Periodendauer zwischen 8.00 ms und 8,66 ms beträgt.

6. Verfahren nach Anspruch 1, **dadurch gekennzeichnet, dass** das drahtlose lokale Netz (WLAN) in einem 2.4 GHz Band arbeitet, und dass die periodische intermittierende Interferenz (PII) durch einen Mikrowellenofen erzeugt wird.

7. Verfahren nach Anspruch 1, **dadurch gekennzeichnet, dass** die Mindest-Rücksetzzeit eine einheitliche bzw. konstante Zeit ist, welche bei jeder der Übertragungswiederholungen verwendet wird.

## Revendications

1. Procédé de retransmission destiné à des réseaux sans fil avec exécution améliorée des brouillages intermittents périodiques, comprenant les étapes ci-dessous consistant à:
identifier une durée de cycle et une durée hors cycle d'un type de brouillage intermittent périodique;
calculer une durée minimale d'attente de données pour un algorithme de retransmission du brouillage de réseau local sans fil (WLAN) présentant une transmission initiale et une pluralité de retransmissions, ladite durée minimale d'attente de données étant ajoutée à un temps de retransmission d'au moins une partie des retransmissions, dans lequel la durée d'attente de données calculée est une valeur qui garantit qu'un durée d'attente de données cumulée de l'algorithme de retransmission du brouillage présente une durée minimale supérieure à la durée de cycle et une durée minimale inférieure à la somme de la durée de cycle et de la durée hors cycle; et
acheminer des données sans fil selon l'algorithme de retransmission du brouillage;
moyennant quoi ladite durée d'attente de données cumulée est définie en tant que la période sur laquelle les tentatives de retransmission sont rencontrées.

2. Procédé de retransmission selon la revendication 1, comprenant en outre les étapes ci-dessous consistant à:
identifier un algorithme de retransmission par défaut lequel ne comporte pas de retard connexe à la durée minimale d'attente de données calculée;
détecter si le brouillage intermittent périodique est présent;
utiliser l'algorithme de retransmission par défaut pour les acheminements de données sans fil en l'absence de détection de brouillage périodique intermittent; et
utiliser l'algorithme de retransmission du brouillage pour les acheminements de données sans fil lorsqu'un brouillage périodique intermittent est détecté.

3. Procédé selon la revendication 2, dans lequel l'algorithme de retransmission par défaut est mis en oeuvre dans une couche inférieure de contrôle d'accès au support (MAC), et dans lequel l'algorithme de retransmission du brouillage est mis en oeuvre dans une couche supérieure de contrôle d'accès au support (MAC).

4. Procédé selon la revendication 2, dans lequel l'algorithme de retransmission par défaut est mis en oeuvre dans une couche de contrôle d'accès au support (MAC), et dans lequel l'algorithme de retransmission du brouillage est mis en oeuvre dans une couche de commande de liaison logique (LLC).

5. Procédé selon la revendication 1, dans lequel la durée de cycle se situe entre 8 ms et 8,66 ms.

6. Procédé selon la revendication 1, dans lequel le réseau local sans fil (WLAN) fonctionne dans une bande de 2,4 GHz, et dans lequel le brouillage intermittent périodique (PII) est généré par un four à micro-ondes.

7. Procédé selon la revendication 1, dans lequel la durée minimale d'attente de données est un temps uniforme appliqué à chacune des retransmissions.
